# EUROPÄISCHE PATENTANMELDUNG

(11) **EP 1 586 760 A2**
(43) Veröffentlichungstag der Anmeldung: **19.10.2005**
(21) Anmeldenummer: 05101304.3
(22) Anmeldetag: 21.02.2005
(51) Int. Cl.: F02D 41/20, F02D 41/36, F02M 51/06

(54) **Kraftstoffeinspritzanlage für einen Verbrennungsmotor und Verfahren zum Betreiben einer solchen**

(30) Priorität: 06.04.2004 DE 102004016894
(71) Anmelder: ROBERT BOSCH GMBH, 70442 Stuttgart (DE)
(72) Erfinder: Huber, Andreas, 71711, Steinheim (DE); Schempp, Stefan, 73249, Wernau (DE); Kolitsch, Michael, 71287, Weissach (DE); Fritsch, Andreas, 71334, Waiblingen (DE); Fischer, Michael, 73262, Reichenbach/Fils (DE)

(57) **Zusammenfassung**

Eine Kraftstoffeinspritzanlage für einen Verbrennungsmotor, insbesondere einen Dieselmotor, mit zumindest zwei Zylindern, wobei die Kraftstoffeinspritzanlage zumindest zwei piezoelektrische Elemente aufweist und jedem Zylinder zumindest je ein piezoelektrisches Element zur Einspritzung von Kraftstoff in den Zylinder durch Laden oder Entladen des piezoelektrischen Elements zugeordnet ist, wobei den piezoelektrischen Elementen eine einzige Versorgungseinheit zum Laden oder Entladen des piezoelektrischen Elementes zugeordnet ist, wobei die Kraftstoffeinspritzanlage eine Einspritzregelung zur Überwachung einer möglichen Überschneidung eines Zeitintervalls, in dem ein piezoelektrisches Element ge- oder entladen werden soll, mit einem Zeitintervall, in dem das andere piezoelektrische Element ge- oder entladen werden soll, aufweist, und wobei im Falle einer Überschneidung die Einspritzregelung eine nicht momentenbildende Einspritzung so weit verkürzt, daß ein piezoelektrisches Element nicht geladen ist, wenn das andere piezoelektrische Element ge- oder entladen werden soll, ist dadurch gekennzeichnet, daß zur Kompensation der aufgrund der Verkürzung eingespritzten Mindermenge der Beginn einer nachfolgenden Einspritzung gleichen Typs durch die Einspritzregelung innerhalb vorgebbarer Grenzen verschoben wird.

## Beschreibung

### Stand der Technik

Die Erfindung betrifft eine Kraftstoffeinspritzanlage für einen Verbrennungsmotor, insbesondere einen Dieselmotor, mit zumindest zwei Zylindern, wobei die Kraftstoffeinspritzanlage zumindest zwei piezoelektrische Elemente aufweist und jedem Zylinder zumindest je ein piezoelektrisches Element zur Einspritzung von Kraftstoff in den Zylinder durch Laden oder Entladen des piezoelektrischen Elements zugeordnet ist, wobei den piezoelektrischen Elementen eine einzige Versorgungseinheit zum Laden oder Entladen des piezoelektrischen Elements zugeordnet ist, wobei die Kraftstoffeinspritzanlage ferner eine Einspritzregelung zur Überwachung einer möglichen Überschneidung eines Zeitintervalls, in dem ein piezoeletrisches Element ge- oder entladen werden soll, mit einem Zeitintervall, in dem das andere piezoelektrische Element ge- oder entladen werden soll, aufweist und wobei im Falle einer Überschneidung die Einspritzregelung die Einspritzung soweit verkürzt, daß ein piezoelektrisches Element nicht geladen ist, wenn das andere piezoelektrische Element ge- oder entladen werden soll. Die Erfindung betrifft ferner ein Verfahren zum Betreiben einer solchen Kraftstoffeinspritzanlage für einen Verbrennungsmotor.

Eine solche Kraftstoffeinspritzanlage und ein Verfahren zum Betreiben einer derartigen Kraftstoffeinspritzanlage sind beispielsweise aus der DE 100 33 343 A1 bekannt.

Diese Einspritzanlagen kommen zum Beispiel bei Dieselfahrzeugen mit Common-Rail-Technik zum Einsatz. Ein bekanntes Anwendungsgebiet sind dabei Verbrennungsmotoren mit einem sogenannten eingeschränkten Zwei-Bank-Betrieb. Hierbei können zwei piezoelektrische Elemente oder Piezoaktoren auf verschiedenen Bänken gleichzeitig geladen sein, aber nicht gleichzeitig geladen oder entladen werden. Bei einem Motor mit beispielsweise sechs Zylindern ergibt sich so ein Bereich von nur 120° Kurbelwelle, der für Einspritzungen uneingeschränkt nutzbar ist. Für die Abgasnachbehandlung und dort im besonderen für die Erhöhung der Temperatur in einem Partikelfilter werden nun Einspritzungen außerhalb dieses Bereichs benötigt. Um aufgrund solcher sogenannter später Nacheinspritzungen entstehende Konflikte gleichzeitigen Ladens/Entladens zu vermeiden, werden die Lade-/Endladeflanken der Einspritzung, die nicht momentenbildend sind, das heißt vom oberen Totpunkt weit entfernt sind, so verschoben, daß sie nicht mit der momentenbildenden Ansteuerung auf der anderen Bank zusammenfallen. Dabei kann es zu einer Verkürzung der Einspritzung kommen mit der Folge, daß der Energieeintrag in den Partikelfilter verringert wird. Hierdurch wird die Regenerationstemperatur im Partikelfilter, die durch derartige Spätnacheinspritzungen eingestellt werden soll, nicht oder nicht wie gewünscht erreicht.

Um eine mittelfristige Kompensation dieser nachteiligen Auswirkungen des Flankenmanagements zu ermöglichen, ist es aus der nicht vorveröffentlichten Patentanmeldung der Anmelderin, Rollnummer R. 306322, bekannt, die der Verkürzung der Einspritzung entsprechende Mindermenge durch die Einspritzregelung einer Einspritzung gleichen Typs zu einem späteren Zeitpunkt zuzuschlagen. Durch diese definierte Kompensation wird die Verkürzung der Einspritzung und die damit verbundene Mindermenge mittelfristig, das heißt im Laufe folgender Lastspiele ausgeglichen, um so den Energieeintrag in den Partikelfilter und damit die Regenerationstemperatur aufrechtzuerhalten. Eine solche Kompensation läuft insbesondere auch für einen überlagerten Temperaturregler völlig verborgen ab.

Aufgrund verschiedener, systembedingter Restriktionen, insbesondere wegen typischer Ansteuerdauern, Winkellagen der betroffenen Einspritzung, maximal zulässiger Verlängerungen von Einspritzungen und dergleichen können nun Situationen entstehen, in denen Einspritzungen über längere Zeiträume verkürzt und die eingespritzte Mindermenge nicht durch Verlängerung mittelfristig ausgleichen kann, so daß der Energieeintrag in den Abgastrakt über längere Zeiträume verringert wird, was wiederum das Erreichen der gewünschten Regenerationstemperatur verhindert.

Der Erfindung liegt daher die Aufgabe zugrunde, eine Kraftstoffeinspritzanlage und ein Verfahren zum Betreiben einer solchen so weiterzubilden, daß die vorbeschriebenen Nachteile beseitigt werden und eine Mengenkompensation auch bei Verkürzung von Einspritzungen über längere Zeiträume möglich ist.

### Vorteile der Erfindung

Diese Aufgabe wird bei einer Kraftstoffeinspritzanlage für einen Verbrennungsmotor und bei einem Verfahren zum Betreiben einer solchen erfindungsgemäß dadurch gelöst, daß zur Kompensation der aufgrund der Verkürzung eingespritzten Mindermenge der Beginn einer nachfolgenden Einspritzung gleichen Typs durch die Einspritzregelung innerhalb vorgebbarer Grenzen verschoben wird.

Die Grundidee der Erfindung liegt darin, nicht die Folgen der Verkürzung einer Einspritzung zu kompensieren, sondern die Ursache der Verkürzung zu verhindern. Durch Verschiebung des Ansteuerbeginns einer aufgrund des Flankenmanagements verkürzten Einspritzung innerhalb eines definierten Bereichs wird der Flankenkonflikt, der ursächlich für die Verkürzung ist, verhindert. Da der zulässige Verschiebebereich für nicht momentenrelevante, späte Nacheinspritzungen relativ groß ist, kann auf diese Weise eine länger dauernde Verkürzung von Einspritzungen verhindert und der zur Regeneration des Partikelfilters benötigte Energieeintrag sichergestellt werden.

Der Beginn einer Einspritzung gleichen Typs bei einem späteren Lastspiel kann dabei nach früher oder nach später verschoben werden. Bevorzugt erfolgt die Verschiebung hin zu einem früheren Zeitpunkt.

Rein prinzipiell kann der verschobene Einspritzbeginn auf unterschiedliche Weise bestimmt werden. Bei einer vorteilhaften Ausführungsform ist vorgesehen, daß die Verschiebung des Einspritzbeginns mittels eines Korrekturwinkels erfolgt, der auf einen von einem Arbeitspunkt abhängigen Wert begrenzt ist.

### Zeichnung

Weitere Vorteile und Einzelheiten der Erfmdung werden nachfolgend unter Bezugnahme auf die beigefügte Zeichnung anhand bevorzugter Ausführungsbeispiele eingehender erläutert.

### In der Zeichnung zeigen:

- Fig. 1: eine aus dem Stand der Technik bekannte Verschaltung piezoelektrischer Elemente;
- Fig. 2A: das Laden eines piezoelektrischen Elementes;
- Fig. 2B: das Laden eines piezoelektrischen Elementes;
- Fig. 2C: das Entladen eines piezoelektrischen Elementes;
- Fig. 2D: das Entladen eines piezoelektrischen Elementes;
- Fig. 3: einen Ansteuerungs-IC;
- Fig. 4: schematisch das erfmdungsgemäße Verfahren anhand der Kombination überlappender Flanken zweier Einspritzungen.

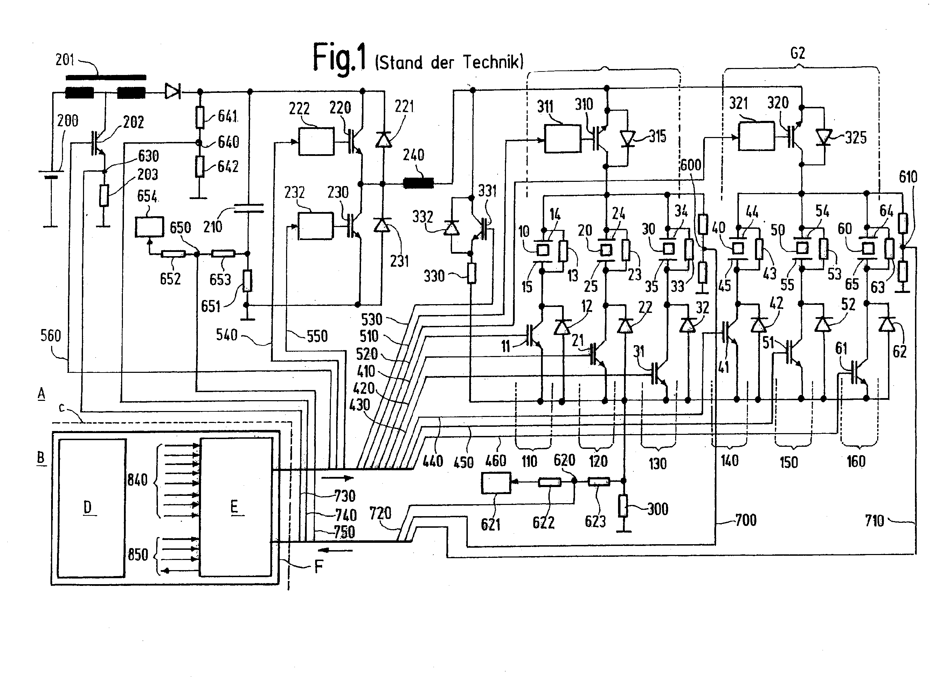

Fig. 1 zeigt piezoelektrische Elemente 10, 20, 30, 40, 50, 60 sowie Mittel zu ihrer Ansteuerung. Dabei bezeichnet A einen Bereich in detaillierter Darstellung sowie B einen Bereich in undetaillierter Darstellung, deren Trennung mit einer gestrichelten Linie c angedeutet ist. Der detailliert dargestellte Bereich A umfaßt eine Schaltung zum Laden und Entladen der piezoelektrischen Elemente 10, 20, 30, 40, 50 und 60. In dem betrachteten Beispiel handelt es sich bei den piezoelektrischen Elementen 10, 20, 30, 40, 50 und 60 um Aktoren in Kraftstoffeinspritzventilen (insbesondere in sogenannten "Common Rail Injektoren") eines Verbrennungsmotors. In der beschriebenen Ausführungsform werden zur unabhängigen Steuerung von sechs Zylindern innerhalb eines Verbrennungsmotors sechs piezoelektrische Elemente 10, 20, 30, 40, 50 und 60 verwendet; für beliebige andere Zwecke könnte jedoch eine beliebe andere Anzahl piezoelektrischer Elemente geeignet sein.

Der undetailliert dargestellte Bereich B umfaßt eine Einspritzregelung F mit einem Steuergerät D und einen Ansteuerungs-IC E, die der Steuerung der Elemente innerhalb des detailliert dargestellten Bereichs A dient. Dem Ansteuerungs-IC E werden verschiedene Meßwerte von Spannungen und Strömen aus der gesamten restlichen Ansteuerschaltung des piezoelektrischen Elements zugeführt. Erfmdungsgemäß sind der Steuerrechner D und der Ansteuerungs-IC E zur Regelung der Ansteuerspannungen sowie der Ansteuerzeiten für das piezoelektrischen Element ausgebildet. Der Steuerrechner D und/oder der Ansteuerungs-IC E sind ebenfalls zur Überwachung verschiedener Spannungen und Ströme der gesamten Ansteuerschaltung des piezoelektrischen Elements ausgebildet.

In der nachfolgenden Beschreibung werden zunächst die einzelnen Elemente innerhalb des detailliert dargestellten Bereichs A eingeführt. Es folgt eine allgemeine Beschreibung der Vorgänge des Ladens und Entladens der piezoelektrischen Elemente 10, 20, 30, 40, 50 und 60. Schließlich wird detailliert beschrieben, wie beide Vorgänge durch den Steuerrechner D und den Ansteuerungs-IC E gesteuert und überwacht werden.

Die piezoelektrischen Elemente 10, 20, 30, 40, 50 und 60 sind in eine erste Gruppe G1 und eine zweite Gruppe G2 aufgeteilt, die jeweils drei piezoelektrische Elemente umfassen (d.h., piezoelektrische Elemente 10, 20 und 30 in der ersten Gruppe G1 bzw. piezoelektrische Elemente 40, 50 und 60 in der zweiten Gruppe G2). Die Gruppen G1 und G2 sind Bestandteile parallelgeschalteter Schaltungsteile. Mit den Gruppenwahlschaltern 310, 320 ist festlegbar, welche der Gruppen G1, G2 der piezoelektrischen Elemente 10, 20 und 30 bzw. 40, 50 und 60 jeweils mit Hilfe einer gemeinsamen Lade- und Entladeeinrichtung entladen werden (für Ladevorgänge sind die Gruppenwahlschalter 310, 320, wie nachstehend noch näher beschrieben, jedoch ohne Bedeutung). Die piezoelektrischen Elemente 10, 20 und 30 der ersten Gruppe G1 sind auf einer Aktorbank und die piezoelektrischen Elemente 40, 50 und 60 in der zweiten Gruppe G2 sind auf einer weiteren Aktorbank angeordnet. Als Aktorbank wird dabei ein Block bezeichnet, in dem zwei oder mehr Aktorelemente, insbesondere piezoelektrische Elemente, fest abgeordnet, z.B. vergossen, sind.

Die Gruppenwahlschalter 310, 320 sind zwischen einer Spule 240 und den jeweiligen Gruppen G1 und G2 angeordnet (deren spulenseitigen Anschlüssen) und sind als Transistoren realisiert. Es sind Treiber 311, 321 implementiert, die von dem Ansteuerungs-IC E empfangene Steuersignale in Spannungen umformen, die nach Bedarf zum Schließen und Öffnen der Schalter wählbar sind.

Parallel zu den Gruppenwahlschaltern 310, 320 sind (als Gruppenwahldioden bezeichnete) Dioden 315 bzw. 325 vorgesehen. Wenn die Gruppenwahlschalter 310, 320 als MOSFETs bzw. IGBTs ausgeführt sind, können beispielsweise diese Gruppenwahldioden 315 und 325 durch die parasitären Dioden selbst gebildet sein. Während Ladevorgängen werden die Gruppenwahlschalter 310, 320 von den Dioden 315, 325 überbrückt. Die Funktionalität der Gruppenwahlschalter 310, 320 reduziert sich daher auf die Auswahl einer Gruppe G1, G2 der piezoelektrischen Elemente 10, 20 und 30 bzw. 40, 50 und 60 lediglich für einen Entladevorgang.

Innerhalb der Gruppen G1 bzw. G2 sind die piezoelektrischen Elemente 10, 20 und 30 bzw. 40, 50 und 60 jeweils als Bestandteile der parallelgeschalteten Piezozweige 110, 120 und 130 (Gruppe G1) und 140, 150 und 160 (Gruppe G2) angeordnet. Jeder Piezozweig umfaßt eine Serienschaltung bestehend aus einer ersten Parallelschaltung mit einem piezoelektrischen Element 10, 20, 30, 40, 50 bzw. 60, und einem (als Zweigwiderstand bezeichneten) Widerstand 13, 23, 33, 43, 53 bzw. 63 sowie einer zweiten Parallelschaltung mit einem als Transistor 11, 21, 31, 41, 51 bzw. 61 ausgeführten (als Zweigwahlschalter bezeichneten) Wahlschalter und einer (als Zweigdiode bezeichneten) Diode 12, 22, 32, 42, 52 bzw. 62).

Die Zweigwiderstände 13, 23, 33, 43, 53 bzw. 63 bewirken, daß das jeweils entsprechende piezoelektrische Element 10, 20, 30, 40, 50 bzw. 60 sich während und nach einem Ladevorgang kontinuierlich entlädt, da sie jeweils beide Anschlüsse der kapazitiven piezoelektrischen Elemente 10, 20, 30, 40, 50 bzw. 60 miteinander verbinden. Die Zweigwiderstände 13, 23, 33, 43, 53 bzw. 63 haben jedoch eine ausreichende Größe, um diesen Vorgang gegenüber den gesteuerten Lade- und Entladevorgängen langsam zu gestalten, wie nachstehend beschrieben. Daher ist die Ladung eines beliebigen piezoelektrischen Elements 10, 20, 30, 40, 50 bzw. 60 innerhalb einer relevanten Zeit nach einem Ladevorgang als unveränderlich zu betrachten.

Die Zweigwahlschalter/Zweigdiodenpaare in den einzelnen Piezozweigen 110, 120, 130, 140, 150 bzw. 160, d.h., Wahlschalter 11 und Diode 12 in Piezozweig 110, Wahlschalter 21 und Diode 22 in Piezozweig 120 usw., sind realisierbar als elektronische Schalter (d.h. Transistoren) mit parasitären Dioden, beispielsweise MOSFETs bzw. IGBTs (wie vorstehend für die den Gruppenwahlschalter/Diodenpaare 310 und 315 bzw. 320 und 325 angegeben).

Mittels der Zweigwahlschalter 11, 21, 31, 41, 51 bzw. 61 ist festlegbar, welche der piezoelektrischen Elemente 10, 20, 30, 40, 50 bzw. 60 jeweils mit Hilfe einer gemeinsamen Lade- und Entladeeinrichtung geladen werden: Geladen werden jeweils all diejenigen piezoelektrischen Elemente 10, 20, 30, 40, 50 bzw. 60, deren Zweigwahlschalter 11,21, 31, 41, 51 bzw. 61 während des nachfolgend beschriebenen Ladevorgangs geschlossen sind. Gewöhnlich ist immer nur einer der Zweigwahlschalter geschlossen.

Die Zweigdioden 12, 22, 32, 42, 52 und 62 dienen der Überbrückung der Zweigwahlschalter 11, 21, 31, 41, 51 bzw. 61 während Entladevorgängen. Daher kann in dem betrachteten Beispiel für Ladevorgänge jedes einzelne piezoelektrische Element ausgewählt werden, während für Entladevorgänge entweder die erste Gruppe G1 oder die zweite Gruppe G2 der piezoelektrischen Elemente 10, 20 und 30 bzw. 40, 50 und 60, bzw. beide ausgewählt werden müssen.

Zurückkommend auf die piezoelektrischen Elemente 10, 20, 30, 40, 50 und 60 selbst, können die Zweigwahlpiezoanschlüsse 15, 25, 35, 45, 55 bzw. 65 entweder mit Hilfe der Zweigwahlschalter 11, 21, 31, 41, 51 bzw. 61 oder über die entsprechenden Dioden 12, 22, 32, 42, 52 bzw. 62 sowie in beiden Fällen zusätzlich über Widerstand 300 an Masse gelegt werden.

Mittels des Widerstands 300 werden die während des Ladens und Entladens der piezoelektrischen Elemente 10, 20, 30, 40, 50 und 60 zwischen den Zweigwahlpiezoanschlüssen 15, 25, 35, 45, 55 bzw. 65 und Masse fließenden Ströme gemessen. Eine Kenntnis dieser Ströme ermöglicht ein gesteuertes Laden und Entladen der piezoelektrischen Elemente 10, 20, 30, 40, 50 und 60. Insbesondere durch Schließen und Öffnen des Ladeschalter 220 bzw. Entladeschalters 230 in Abhängigkeit des Betrags der Ströme, ist es möglich, den Ladestrom bzw. Entladestrom auf vorgegebene Mittelwerte einzustellen und/oder zu verhindern, daß sie vorgegebene Maximalwerte und/oder Minimalwerte überschreiten bzw. unterschreiten.

In dem betrachteten Beispiel, ist für die Messung selbst noch eine Spannungsquelle 621 erforderlich, die eine Spannung von beispielsweise 5 V DC liefert, sowie ein Spannungsteiler in Form zweier Widerstände 622 und 623. Damit soll der Ansteuerungs-IC E (der die Messungen durchführt) vor negative Spannungen geschützt werden, die andernfalls an Meßpunkt 620 auftreten könnten, und die mit dem Ansteuerungs-IC E nicht beherrschbar sind: Derartige negative Spannungen werden durch Addition mit einer von der genannten Spannungsquelle 621 und den Spannungsteiler-Widerständen 622 und 623 gelieferten positiven Spannungsanordnung verändert.

Der andere Anschluß des jeweiligen piezoelektrischen Elements 10, 20, 30, 40, 50 und 60, d.h. die jeweilige Gruppenwahlpiezoanschluß 14, 24, 34, 44, 54 bzw. 64, kann über den Gruppenwahlschalter 310 bzw. 320 oder über die Gruppenwahldiode 315 bzw. 325 sowie über eine Spule 240 und eine Parallelschaltung bestehend aus einem Ladeschalter 220 und einer Ladediode 221 an den Pluspol einer Spannungsquelle angeschlossen werden, sowie alternativ bzw. zusätzlich über den Gruppenwahlschalter 310 bzw. 320 oder über die Diode 315 bzw. 325 sowie über die Spule 240 und eine Parallelschaltung bestehend aus einem Entladeschalter 230 und einer Entladediode 231 an Masse gelegt werden. Ladeschalter 220 und Entladeschalter 230 sind beispielsweise als Transistoren realisiert, die über Treiber 222 bzw. 232 angesteuert werden.

Die Spannungsquelle umfaßt einen Kondensator 210. Der Kondensator 210 wird von einer Batterie 200 (beispielsweise einer Kraftfahrzeugbatterie) und einem nachgeschalteten Gleichspannungswandler 201 geladen. Der Gleichspannungswandler 201 formt die Batteriespannung (beispielsweise 12 V) in im wesentlichen beliebige andere Gleichspannungen (beispielsweise 250 V) um, und lädt den Kondensator 210 auf diese Spannung auf. Die Steuerung des Gleichspannungswandlers 201 erfolgt über den Transistorschalter 202 und den Widerstand 203, der der Messung von am Messpunkt 630 abgegriffenen Strömen dient.

Zum Zwecke der Gegenkontrolle wird durch den Ansteuerungs-IC E sowie durch die Widerstände 651, 652 und 653 und beispielsweise eine 5 V Gleichspannungsquelle 654 eine weitere Strommessung am Meßpunkt 650 ermöglicht; des weiteren ist durch den Ansteuerungs-IC E sowie durch die spannungsteilenden Widerstände 641 und 642 eine Spannungsmessung am Meßpunkt 640 möglich.

Ein (als Totalentladungswiderstand bezeichneter) Widerstand 330, ein (als Stoppschalter bezeichneter) Schalter 331 sowie eine (als Totalentladungsdiode bezeichnete) Diode 332 dienen schließlich der Entladung der piezoelektrischen Elemente 10, 20, 30, 40, 50 und 60 (falls sie außerhalb des Normalbetreibers, wie nachstehend beschrieben, nicht durch den "normalen" Entladevorgang entladen werden). Der Stoppschalter 331 wird vorzugsweise nach "normalen" Entladevorgängen (zyklisches Entladen über Entladeschalter 230) geschlossen und legt dadurch die piezoelektrischen Elemente 10, 20, 30, 40, 50 und 60 über die Widerstände 330 und 300 an Masse. Somit werden jegliche, eventuell in den piezoelektrischen Elementen 10, 20, 30, 40, 50 und 60 verbliebene Restspannungen beseitigt. Die Totalentladungsdiode 332 verhindert ein Auftreten von negativen Spannungen an den piezoelektrischen Elementen 10, 20, 30, 40, 50 und 60, die unter Umständen durch die negativen Spannungen beschädigt werden könnten.

Das Laden und Entladen aller piezoelektrischen Elemente 10, 20, 30, 40, 50 und 60, bzw. eines bestimmten piezoelektrischen Elements 10, 20, 30, 40, 50 bzw. 60, erfolgt mit Hilfe einer einzigen (allen Gruppen und ihren piezoelektrischen Elementen gemeinsamen) Lade- und Entladeeinrichtung. In dem betrachteten Beispiel umfaßt die gemeinsame Lade-und Entladeeinrichtung die Batterie 200, den Gleichspannungswandler 201, den Kondensator 210, den Ladeschalter 220 und den Entladeschalter 230, Ladediode 221 und Entladediode 231 sowie die Spule 240.

Das Laden und Entladen eines jeden piezoelektrischen Elements erfolgt auf die gleiche Art und Weise und wird nachfolgend unter Bezugnahme auf lediglich das erste piezoelektrische Element 10 erläutert.

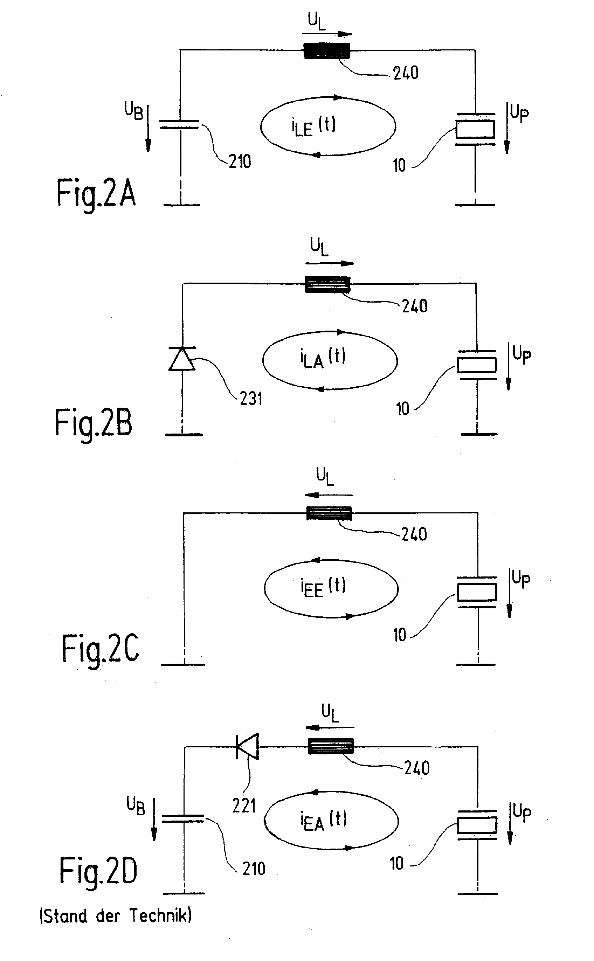

Die während der Lade- und Entladevorgänge auftretenden Zustände werden mit Bezug auf die Figuren 2A bis 2D erläutert, von denen die Figuren 2A und 2B das Laden des piezoelektrischen Elements 10, sowie die Figuren 2C und 2D das Entladen des piezoelektrischen Elements 10 veranschaulichen.

Die Steuerung der Auswahl eines oder mehrerer zu ladender bzw. zu entladender piezoelektrischer Elemente 10, 20, 30, 40, 50 und 60, der im folgenden beschriebene Ladevorgang sowie der Entladevorgang erfolgt durch den Ansteuerungs-IC E und das Steuergerät D durch Öffnen bzw. Schließen eines oder mehrerer der oben eingeführten Schalter 11, 21, 31, 41, 51, 61; 310, 320; 220, 230 und 331. Die Wechselwirkungen zwischen den Elementen innerhalb des detailliert dargestellten Bereichs A einerseits sowie des Ansteuerungs-IC E und des Steuerrechners D andererseits wird nachfolgend noch näher erläutert.

In bezug auf den Ladevorgang, muß zunächst ein aufzuladendes piezoelektrisches Element 10, 20, 30, 40, 50 bzw. 60 ausgewählt werden. Um lediglich das erste piezoelektrische Element 10 zu laden, wird der Zweigwahlschalter 11 des ersten Zweiges 110 geschlossen, während alle übrigen Zweigwahlschalter 21,31,41,51, und 61 geöffnet bleiben. Um ausschließlich ein beliebiges anderes piezoelektrisches Element 20, 30, 40, 50, 60 zu laden, bzw. um mehrere gleichzeitig zu laden, würde dessen/deren Auswahl durch Schließen der entsprechenden Zweigwahlschalter 21,31,41,51, und/oder 61 erfolgen.

Sodann kann der Ladevorgang selbst erfolgen:

Innerhalb des betrachteten Beispiels ist für den Ladevorgang im allgemeinen eine positive Potentialdifferenz zwischen dem Kondensator 210 und Gruppenwahlpiezoanschluß 14 des ersten piezoelektrischen Elements 10 erforderlich. Solange jedoch Ladeschalter 220 und Entladeschalters 230 geöffnet sind, erfolgt kein Laden bzw. Entladen des piezoelektrischen Elements 10. In diesem Zustand befmdet sich die in Fig. 1 abgebildete Schaltung in einem stationären Zustand, d.h. das piezoelektrische Element 10 behält seinen Ladungszustand im wesentlichen unverändert bei, wobei keine Ströme fließen.

Zum Laden des ersten piezoelektrischen Elements 10 wird Schalter 220 geschlossen. Theoretisch könnte das erste piezoelektrische Element 10 allein dadurch geladen werden. Dies würde jedoch zu großen Strömen führen, die die betreffenden Elemente beschädigen könnten. Daher werden die auftretenden Ströme am Meßpunkt 620 gemessen und Schalter 220 wird wieder geöffnet sobald die erfaßten Ströme einen bestimmten Grenzwert überschreiten. Um auf dem ersten piezoelektrischen Element 10 eine beliebige Ladung zu erreichen, wird daher Ladeschalter 220 wiederholt geschlossen und geöffnet, während Entladeschalter 230 geöffnet bleibt.

Bei näherer Betrachtung ergeben sich bei geschlossenem Ladeschalter 220 die in Fig. 2A dargestellten Verhältnisse, d.h. es entsteht eine geschlossene Schaltung umfassend eine Reihenschaltung bestehend aus dem piezoelektrischen Element 10, Kondensator 210 und der Spule 240, wobei in der Schaltung ein Strom i_{LE}(t) fließt, wie in Fig. 2A durch Pfeile angedeutet. Aufgrund dieses Stromflusses werden sowohl dem Gruppenwahlpiezoanschluß 14 des ersten piezoelektrischen Elements 10 positive Ladungen zugeführt als auch in der Spule 240 Energie gespeichert.

Wenn der Ladeschalter 220 kurz (beispielsweise einige µs) nach dem Schließen öffnet, ergeben sich die in Fig. 2B dargestellten Verhältnisse: es entsteht eine geschlossene Schaltung umfassend eine Reihenschaltung bestehend aus dem piezoelektrischen Element 10, Entladediode 231 und Spule 240, wobei in der Schaltung ein Strom i_{LA}(t) fließt, wie in Fig. 2B durch Pfeile angedeutet. Aufgrund dieses Stromflusses fließt in der Spule 240 gespeicherte Energie in das piezoelektrische Element 10. Entsprechend der Energiezufuhr an das piezoelektrische Element 10, erhöht sich die in diesem auftretende Spannung und vergrößern sich dessen Außenabmessungen. Bei erfolgter Energieübertragung von der Spule 240 an das piezoelektrische Element 10, ist der in Fig. 1 dargestellte und bereits beschriebene stationäre Zustand der Schaltung wieder erreicht.

Zu diesem Zeitpunkt bzw. früher oder später (je nach gewünschtem Zeitprofil des Ladevorgangs), wird Ladeschalter 220 erneut geschlossen und wieder geöffnet, so daß die vorstehend beschriebenen Vorgänge erneut ablaufen. Aufgrund des erneuten Schließens und erneuten Öffnens des Ladeschalters 220 erhöht sich die in dem piezoelektrischen Element 10 gespeicherte Energie (die in dem piezoelektrischen Element 10 bereits gespeicherte Energie und die neu zugeführte Energie summieren sich), und die an dem piezoelektrischen Element 10 auftretenden Spannung erhöht sich und dessen Außenabmessungen vergrößern sich entsprechend.

Werden das oben erwähnte Schließen und Öffnen des Ladeschalters 220 vielfach wiederholt, so erfolgt die Erhöhung der an dem piezoelektrischen Element 10 auftretenden Spannung sowie die Ausdehnung des piezoelektrischen Elements 10 stufenweise.

Wenn Ladeschalter 220 eine vorgegebene Anzahl von Malen geschlossen und geöffnet wurde und/oder das piezoelektrische Element 10 den gewünschten Ladezustand erreicht hat, wird das Laden des piezoelektrischen Elements durch Offenlassen des Ladeschalters 220 beendet.

In bezug auf den Entladevorgang, werden in dem betrachteten Beispiel die piezoelektrischen Elemente 10, 20, 30, 40, 50 und 60 in Gruppen (G1 und/oder G2) wie nachfolgend beschrieben entladen:

Zunächst werden der Gruppenwahlschalter 310 und/oder 320 der Gruppe G und/oder G2, deren piezoelektrische Elemente zu entladen sind, geschlossen (die Zweigwahlschalter 11, 21, 31, 41, 51, 61 haben keinen Einfluß auf die Auswahl der piezoelektrischen Elemente 10, 20, 30, 40, 50, 60 für den Entladevorgang, da sie in diesem Fall durch die Dioden 12, 22, 32, 42, 52 und 62 überbrückt werden). Um das piezoelektrische Element 10 as Teil der ersten Gruppe G1 zu entladen, wird daher der erste Gruppenwahlschalter 310 geschlossen.

Wenn der Entladeschalter 230 geschlossen ist, ergeben sich die in Fig. 2C dargestellten Verhältnisse: es entsteht eine geschlossene Schaltung umfassend eine Reihenschaltung bestehend aus dem piezoelektrischen Element 10 und der Spule 240, wobei in der Schaltung ein Strom i_{EE}(t) fließt, wie in Fig. 2C durch Pfeile angedeutet. Aufgrund dieses Stromflusses wird die in dem piezoelektrischen Element gespeicherte Energie (ein Teil davon) in die Spule 240 übertragen. Entsprechend der Energieübertragung von dem piezoelektrischen Element 10 zur Spule 240, sinkt die an dem piezoelektrischen Element 10 auftretende Spannung und verringern sich dessen Außenabmessungen.

Wenn der Entladeschalter 230 kurz (beispielsweise, einige µs) nach dem Schließen öff net, ergeben sich die in Fig. 2D dargestellten Verhältnisse: es entsteht eine geschlossene Schaltung umfassend eine Reihenschaltung bestehend aus dem piezoelektrischen Element 10, Kondensator 210, Ladediode 221 und der Spule 240, wobei in der Schaltung ein Strom i_{EA}(t) fließt, wie in Fig. 2D durch Pfeile angedeutet. Aufgrund dieses Stromflusses wird in der Spule 240 gespeicherte Energie in den Kondensator 210 rückgeführt. Bei erfolgter Energieübertragung von der Spule 240 in den Kondensator 210, ist der in Fig. 1 dargestellte und bereits beschriebene stationäre Zustand der Schaltung wieder erreicht.

Zu diesem Zeitpunkt bzw. früher oder später (je nach gewünschtem Zeitprofil des Entladevorgangs), wird Entladeschalter 230 erneut geschlossen und wieder geöffnet, so daß die vorstehend beschriebenen Vorgänge erneut ablaufen. Aufgrund des erneuten Schließens und erneuten Öffnens des Entladeschalters 230 nimmt die in dem piezoelektrischen Element 10 gespeicherte Energie weiter ab, und die an dem piezoelektrischen Element auftretenden Spannung und dessen Außenabmessungen nehmen ebenfalls entsprechend ab.

Werden das oben erwähnte Schließen und Öffnen des Entladeschalters 230 vielfach wiederholt, so erfolgt die Abnahme der an dem piezoelektrischen Element 10 auftretenden Spannung sowie der Ausdehnung des piezoelektrischen Elements 10 stufenweise.

Wenn Entladeschalter 230 eine vorgegebene Anzahl von Malen geschlossen und geöffnet wurde und/oder das piezoelektrische Element den gewünschten Ladezustand erreicht hat, wird das Entladen des piezoelektrischen Elements durch Offenlassen des Entladeschalters 230 beendet.

Die Wechselwirkung zwischen dem Ansteuerungs-IC E und dem Steuerrechner D einerseits sowie den Elementen innerhalb des detailliert dargestellten Bereichs A andererseits erfolgt mit Hilfe von Steuersignalen, die über Zweigwahlsteuerleitungen 410, 420, 430, 440, 450, 460, Gruppenwahlsteuerleitungen 510, 520, Stoppschaltersteuerleitung 530, Ladeschaltersteuerleitung 540 und Entladeschaltersteuerleitung 550 sowie Steuerleitung 560 Elementen innerhalb des detailliert dargestellten Bereichs A von dem Ansteuerungs-IC E zugeführt werden. Andererseits werden an den Meßpunkten 600, 610, 620, 630, 640, 650 innerhalb des detailliert dargestellten Bereichs A Sensorsignale erfaßt, die dem Ansteuerungs-IC E über die Sensorleitungen 700, 710, 720, 730, 740, 750 zugeführt werden.

Zur Auswahl der piezoelektrischen Elemente 10, 20, 30, 40, 50 bzw. 60 für die Ausführung von Lade- bzw. Entladevorgängen einzelner oder mehrerer piezoelektrischer Elemente 10, 20, 30, 40, 50, 60 durch Öffnen und Schließen der entsprechenden Schalter wie vorstehend beschrieben, werden an die Transistorbasen mittels der Steuerleitungen Spannungen angelegt bzw. nicht angelegt. Mittels der Sensorsignale erfolgt insbesondere eine Bestimmung der sich ergebenden Spannung der piezoelektrischen Elemente 10, 20 und 30, bzw. 40, 50 und 60 anhand der Meßpunkte 600 bzw. 610 sowie der Lade- und Entladeströme anhand des Meßpunkts 620.

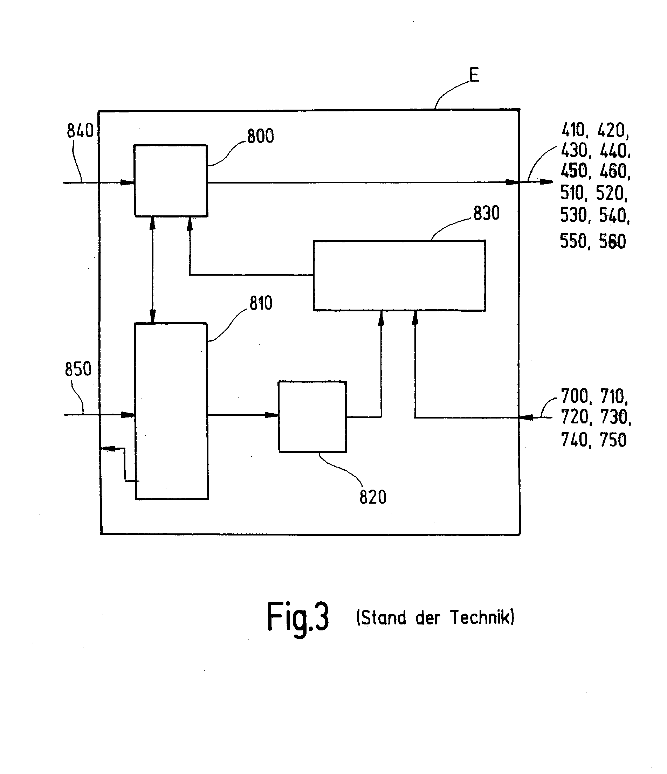

In Fig.3 sind einige der in dem Ansteuerungs-IC E enthaltenen Bauelemente angegeben: Eine Logik-Schaltung 800, Speicher 810, Digital-Analog-Umsetzerbaustein 820 sowie Komparatorbaustein 830. Ferner ist angegeben, daß der (für Steuersignale verwendete) schnelle Parallelbus 840 mit der Logik- Schaltung 800 des Ansteuerungs-IC E verbunden ist, während der langsamere serielle Bus 850 mit dem Speicher 810 verbunden ist. Die logische Schaltung 800 ist mit dem Speicher 810, mit dem Komparatorbaustein 830 sowie mit den Signalleitungen 410, 420, 430, 440, 450 und 460; 510 und 520; 530, 540, 550 und 560 verbunden. Der Speicher 810 ist mit der logischen Schaltung 800 sowie mit dem Digital-Analog-Umsetzerbaustein 820 verbunden. Des weiteren ist der Digital-Analog-Umsetzerbaustein 820 mit dem Komparatorbaustein 830 verbunden. Darüber hinaus ist der Komparatorbaustein 830 mit den Sensorleitungen 700 und 710, 720, 730, 740 und 750 und - wie bereits erwähnt - mit der Logik-Schaltung 800 verbunden.

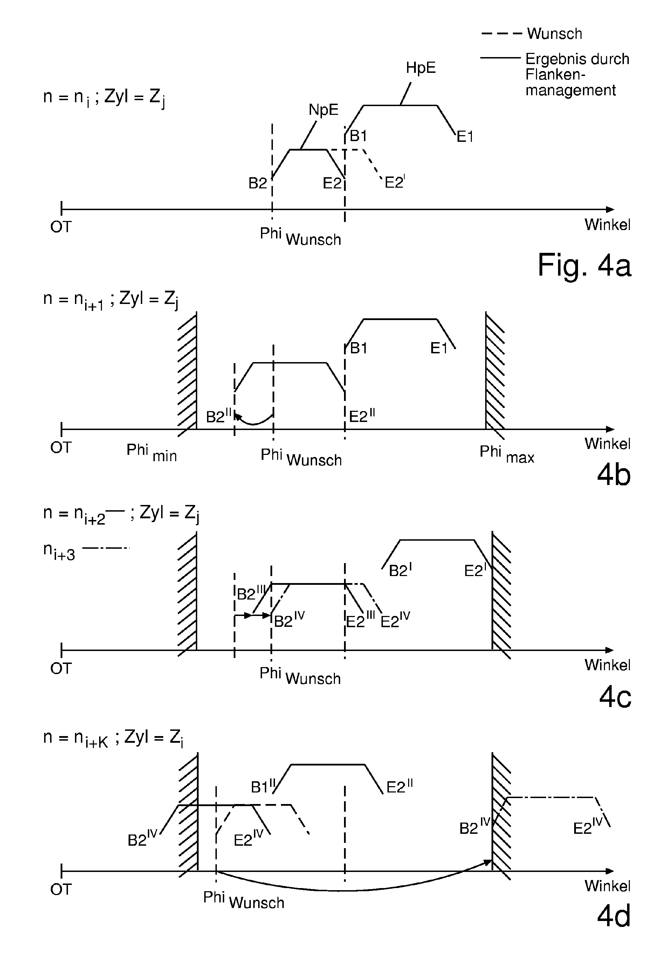

Die Einspritzung der piezoelektrischen Elemente wird jeweils durch eine Lade- und eine Entladeflanke gekennzeichnet, wie sie schematisch in Fig. 4 dargestellt ist. Im folgenden wird die Ladeflanke einer ersten, höherprioren Einspritzung HpE, also einer Einspritzung hoher Priorität mit B1, deren Entladeflanke mit E1, die Ladeflanke einer zweiten niederprioren Einspritzung NpE, das heißt Einspritzung niedrigerer Priorität als die der ersten Einspritzung mit B2 und deren Entladeflanke mit E2 bezeichnet.

Die erste Einspritzung erfolgt auf einer Zylinderbank, die zweite Einspritzung erfolgt auf einer anderen Zylinderbank.

Tritt, wie in Fig. 4a schematisch dargestellt, eine Überlappung der niederprioren Nacheinspritzung NpE, deren Beginnflanke bei einer vorgegebenen Wunschzeit oder einem vorgegebenen Wunschwinkel von 0,5 phi_{wunsch} beginnt, mit der höherprioren Einspritzung HpE auf, wie beispielsweise eine Überlappung der Flanken B1 und E2', so wird die Entladeflanke E2' der niederprioren Einspritzung verschoben, so daß eine Verkürzung der Ansteuerdauer der niederprioren Einspritzung resultiert. in Fig. 4 sind dabei jeweils die Ansteuerdauern über dem Ansteuerwinkel, der der Ansteuerzeit proportional ist, aufgetragen.

Diese Verkürzung der Ansteuerdauer und damit die Einspritzung einer geringeren Menge führt nun dazu, daß der Energieeintrag in einen Partikelfilter verringert wird. Hieraus resultiert wiederum eine Verringerung der Regenerationstemperatur im Partikelfilter und somit eine Verschlechterung der Reduktion schädlicher Partikel im Abgas. Um diesen Nachteil zu beseitigen, wird nun bei einem darauffolgenden Lastspiel n = nᵢ₊₁ der Beginn einer niederprioren Nacheinspritzung NpE gleichen Typs auf einen früheren Zeitpunkt verschoben, das heißt die Ladeflanke B2" findet nunmehr früher statt. Hierdurch wird eine Verkürzung der Einspritzdauer durch Verschiebung der Entladeflanke E2" vermieden. Vielmehr endet die Entladeflanke E2" nunmehr bevor die Ladeflanke B1 der höherprioren Einspritzung stattfindet. Die Verschiebung erfolgt dabei innerhalb vorgebbarer Grenzen des für den Einspritzbeginn signifikanten Winkels vor OT statt. Diese Grenzen sind in Fig. 4b, Fig. 4c und Fig. 4d durch schematisch schraffierte Bereiche phiₘᵢₙ und phiₘₐₓ dargestellt.

Wie bereits erwähnt, erfolgt die Verschiebung der Einspritzung nach früh in Richtung OT. Der Korrekturwinkel wird durch Umrechnung der Verkürzungszeit in einen Winkel bestimmt, wobei die Grenzen phi_{min,} phiₘₐₓ arbeitspunktabhängig bestimmt werden. Zusätzlich kann der Korrekturwinkel um einen Korrekturwert erhöht werden oder aber unmittelbar an eine Grenze gesetzt werden, um die Vermeidung des Flankenkonflikts schon im ersten Korrekturschritt sicherzustellen. Sofern trotz einer solchen Winkelkorrektur weiterhin eine Verkürzung durch das Flankenmanagement vorgenommen wird, wird erneut ein "verschobener" Korrekturwinkel berechnet.

Falls keine Verkürzung mehr vorliegt, wird, wie schematisch in Fig. 4c dargestellt, der Korrekturwinkel mit defmierten Dekrementen wieder reduziert, um die Abweichung vom eigentlichen Sollwert schnellstmöglich abzubauen. Alternativ hierzu kann auch auf der Basis der aktuellen Randbedingungen, die durch die Drehzahl, die Einspritzbeginne und -dauern definiert sind, eine maximal mögliche Winkelreduktion berechnet und vorgenommen werden. In Fig. 4c ist schematisch bei einem Lastspiel n = nᵢ₊₂ (durchgezogene Linie) und n = nᵢ₊₃ (strichpunktierte Linie) die Verkürzung des Korrekturwinkels dargestellt. Diese Verkürzung des Korrekturwinkels führt zu einer Verschiebung der Ladeflanke B2'" hin zu B2^{IV} sowie der Entladeflanke E2"' hin zu einer Entladeflanke E2^{IV} im Falle der niederprioren Nacheinspritzung. Die Verschiebung erfolgt so lange, bis die Zeitpunkte und damit Winkel der Ladeflanken B2^{IV} und E2^{IV} wieder den ursprünglichen Zeitpunkten der Ladeflanken B2 und E2' entsprechen.

Wenn bei einer Verschiebung der niederprioren Nacheinspritzung nach früh die Grenze phiₘᵢₙ erreicht wird, wie dies schematisch in Fig. 4d dargestellt ist, wo die Ladeflanke B2^{V} die vorgegebene Grenze phiₘᵢₙ unterschreitet, wird zunächst versucht, durch eine Verschiebung nach spät, das heißt weg vom oberen Todpunkt OT, eine Verkürzung zu vermeiden. Zur Berechnung des Korrekturwinkels nach spät sind verschiedene Strategien denkbar. Zum einen kann ein Sprung an den Begrenzungswert phiₘₐₓ für eine Verschiebung nach spät erfolgen, es kann eine Vorzeichenumkehr des aktuellen Korrekturwinkels erfolgen; denkbar ist auch die Suche nach einem geeigneten, einen Flankenkonflikt vermeidenden Korrekturwert auf der Basis aktueller Randbedingungen (Drehzahl, Einspritzbeginne, -dauern). Falls keine Verkürzung mehr vorliegt, wird auch bei einer Verschiebung nach spät der Korrekturwinkel mit definierten Inkrementen wieder reduziert, um die Abweichung vom eigentlichen Sollwert schnellstmöglich abzubauen.

Das erfindungsgemäße Verfahren wurde vorstehend anhand von Verschiebungen erläutert, die zunächst in Richtung OT, das heißt zu früheren Einspritzbeginnen und dann erst, wenn eine Kollision mit den vorgegebenen Grenzen eintritt (phiₘᵢₙ), hin zu spät erfolgen. Es versteht sich aber, daß das erfindungsgemäße Verfahren hierauf nicht beschränkt ist und vielmehr auch zunächst Verschiebungen zu spät, daß heißt weiter weg vom OT liegenden Einspritzbeginnen und dann bei Kollision mit der Grenze phiₘₐₓ zu früheren Einspritzbeginnen möglich sind.

Das Verfahren kann in Fahrzeugen leicht realisiert und überprüft werden, wobei aufgrund von Messungen von Strömen und Aktorspannung der piezoelektrischen Aktoren auf Ansteuerbeginne und Ansteuerdauern geschlossen werden kann und somit die Reaktion eines Steuergeräts im Falle von Kollision jederzeit erfaßt werden kann.

## Patentansprüche

1. Kraftstoffeinspritzanlage fiir einen Verbrennungsmotor, insbesondere einen Dieselmotor, mit zumindest zwei Zylindern, wobei die Kraftstoffeinspritzanlage zumindest zwei piezoelektrische Elemente aufweist und jedem Zylinder zumindest je ein piezoelektrisches Element zur Einspritzung von Kraftstoff in den Zylinder durch Laden oder Entladen des piezoelektrischen Elements zugeordnet ist, wobei den piezoelektrischen Elementen eine einzige Versorgungseinheit zum Laden oder Entladen des piezoelektrischen Elementes zugeordnet ist, wobei die Kraftstoffeinspritzanlage eine Einspritzregelung zur Überwachung einer möglichen Überschneidung eines Zeitintervalls, in dem ein piezoelektrisches Element ge-oder entladen werden soll, mit einem Zeitintervall, in dem das andere piezoelektrische Element ge- oder entladen werden soll, aufweist, und wobei im Falle einer Überschneidung die Einspritzregelung eine nicht momentenbildende Einspritzung so weit verkürzt, daß ein piezoelektrisches Element nicht geladen ist, wenn das andere piezoelektrische Element ge- oder entladen werden soll, **dadurch gekennzeichnet, daß** zur Kompensation der aufgrund der Verkürzung eingespritzten Mindermenge der Beginn einer nachfolgenden Einspritzung gleichen Typs durch die Einspritzregelung innerhalb vorgebbarer Grenzen verschoben wird.

2. Kraftstoffeinspritzanlage nach Anspruch 1, **dadurch gekennzeichnet, daß** die Einspritzregelung den Beginn einer Einspritzung gleichen Typs bei einem späteren Lastspiel am gleichen Zylinder hin zu einem früheren oder späteren Zeitpunkt verschiebt.

3. Kraftstoffeinspritzanlage nach Anspruch 1 oder 2, **dadurch gekennzeichnet, daß** die Verschiebung des Beginns der Einspritzung mittels eines Korrekturwinkels, der auf einen Arbeitspunkt abhängigen Wert begrenzt ist, erfolgt.

4. Verfahren zum Betreiben einer Kraftstoffeinspritzanlage für einen Verbrennungsmotor mit zumindest zwei Zylindern, wobei die Kraftstoffeinspritzanlage zumindest zwei piezoelektrische Elemente aufweist und jedem Zylinder zumindest je ein piezoelektrisches Element zur Einspritzung von Kraftstoff in den Zylinder durch Laden oder Entladen des piezoelektrischen Elementes zugeordnet ist, wobei den piezoelektrischen Elementen eine einzige Versorgungseinheit zum Laden oder Entladen des piezoelektrischen Elementes zugeordnet ist, wobei überwacht wird, ob eine Überschneidung eines Zeitintervalls, in dem ein piezoelektrisches Element ge- oder entladen werden soll, mit einem Zeitintervall, in dem ein anderes piezoelektrische Element ge- oder entladen werden soll, vorliegt und wobei im Falle einer Überschneidung die Einspritzzeit einer nicht momentenbildenden Einspritzung des anderen piezoelektrischen Elementes verkürzt wird, **dadurch gekennzeichnet, daß** zur Kompensation der aufgrund der Verkürzung eingespritzten Mindermenge der Beginn einer nachfolgenden Einspritzung gleichen Typs innerhalb vorgebbarer Grenzen verschoben wird.

5. Verfahren nach Anspruch 4, **dadurch gekennzeichnet, daß** der Beginn der nachfolgenden Einspritzung hin zu einem früheren oder späteren Zeitpunkt verschoben wird.

6. Verfahren nach Anspruch 4, **dadurch gekennzeichnet, daß** der Beginn der nachfolgenden Einspritzung auf den Wert einer der vorgebbaren Grenzen verschoben wird.

7. Verfahren nach einem der Ansprüche 4 bis 6, **dadurch gekennzeichnet, daß** die Verschieberichtung umgekehrt wird, wenn der Beginn der nachfolgenden Einspritzung aufgrund einer Verschiebung eine der vorgebbaren Grenze überschreitet.

8. Verfahren nach einem der Ansprüche 4 bis 6, **dadurch gekennzeichnet, daß** das Intervall, um das der Beginn der nachfolgenden Einspritzung verschoben wurde, nach Beendigung der Verkürzung vorhergehender Einspritzungen durch vorgebbare Dekremente reduziert wird.
